# FASCICULE DE BREVET EUROPEEN

(11) **EP 2 875 929 B1**
(45) Date de publication et mention de la délivrance du brevet: **24.08.2016**
(21) Numéro de dépôt: 14191612.2
(22) Date de dépôt: 04.11.2014
(51) Int. Cl.: B29C 45/00, B29C 70/68, B29C 70/72, F16B 37/06, B29C 45/14

(54) **INSERT DESTINÉ À ÊTRE INCLUS DANS UNE PIÈCE MOULÉE PAR INJECTION ET PIÈCE MOULÉE COMPRENANT UN TEL INSERT**
EINSATZ ZUM EINFÜGEN IN EIN SPRITZGUSSTEIL, UND SPRITZGUSSTEIL, DAS EINEN SOLCHEN EINSATZ UMFASST
INSERT INTENDED FOR BEING INCLUDED IN AN INJECTION-MOULDED PART AND MOULDED ITEM COMPRISING SUCH AN INSERT

(30) Priorité: 18.11.2013 FR 1302643
(43) Date de publication de la demande: 27.05.2015
(73) Titulaire: Bollhoff Otalu S.A., 73493 La Ravoire (FR)
(72) Inventeur: Lejars, Patrick, 73610 St Alban de Montbel (FR)
(74) Mandataire: Hecké, Gérard

(56) Documents cités:
- WO-A1-2014/018848
- DE-A1- 4 117 167
- DE-U1- 9 115 292
- GB-A- 2 044 172
- JP-A- S57 201 638
- JP-A- 2013 122 285

## Description

### Domaine technique de l'invention

L'invention est relative aux inserts destinés à être inclus dans une pièce moulée par injection.

### État de la technique

De manière générale, un insert destiné à être inclus dans une pièce moulée par injection, noté également insert à surmouler, peut être un écrou, un rivet, une vis ou un goujon, ou une forme quelconque suivant sa fonction. Les inserts inclus dans une pièce moulée doivent être adaptés pour résister à des forces de traction et de pression pour garantir une bonne tenue de la liaison mécanique entre la pièce moulée dans laquelle ils sont inclus et une autre pièce que l'on souhaite fixer à la pièce moulée.

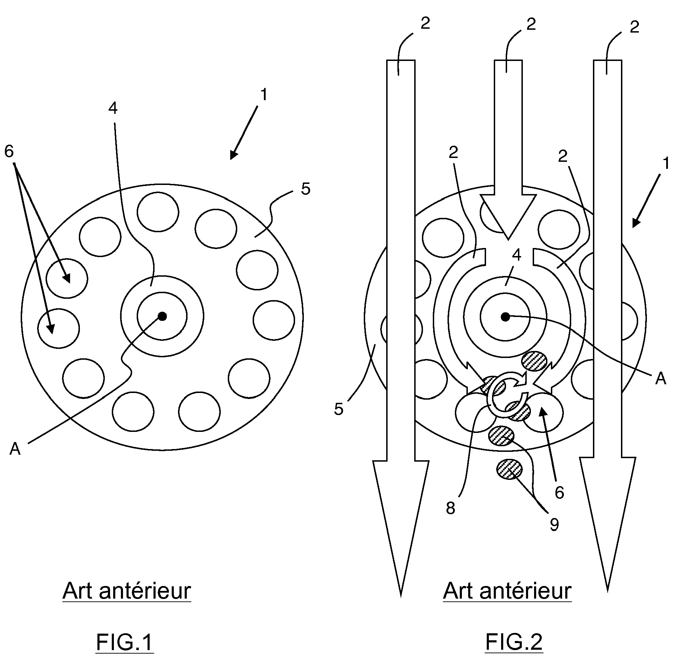

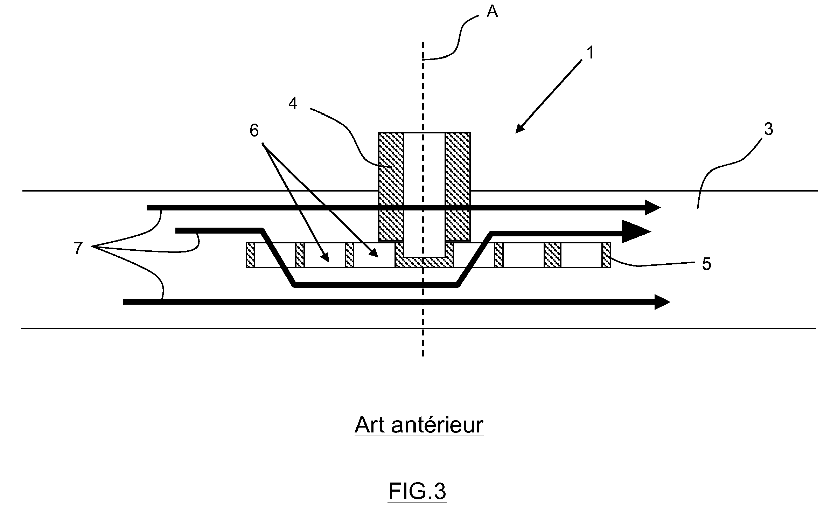

Sur les figures 1 à 3, on a représenté de façon schématique un rivet 1 de l'art antérieur. Sur la figure 1, on a représenté une vue de dessus du rivet 1. Sur la figure 2, on a représenté une vue de dessus du rivet 1 au sein d'un flux d'écoulement laminaire d'une résine 2 utilisée pour réaliser une pièce moulée 3. Sur la figure 3, on a représenté une vue en coupe du rivet 1 inclus dans la pièce moulée 3. Le rivet 1 représenté sur les figures 1 à 3 comporte un corps creux 4, tel un fût, s'étendant le long d'un axe longitudinal A du rivet 1, et une embase 5 soudée à une extrémité du corps 4. L'embase 5 à une forme d'une plaque circulaire. En outre, l'embase 5 est perforée, c'est-à-dire qu'elle comporte plusieurs orifices circulaires traversant 6 régulièrement répartis sur l'embase 5. Un tel rivet 1 est intégré dans la pièce moulée 3 en injectant une résine sur le rivet 1, de manière à noyer l'embase 5 dans la résine pour fixer mécaniquement le rivet 1 à la pièce 3 lorsque la résine durcie. En général, la résine est un matériau fluide durcissable réalisé à partir de polyester et de fibres de verre. Mais ces rivets n'offrent pas une tenue mécanique suffisante dans la pièce moulée par injection. En particulier, lorsque le rivet est réalisé à partir d'une matière différente de celle de la résine, par exemple un rivet en acier, la tenue mécanique de matériaux composites est difficile à obtenir.

En effet, pour réaliser la pièce moulée 3, on injecte la résine en créant le flux d'écoulement laminaire de la résine 2 le long des surfaces de l'embase perforée 5. Par ailleurs, les orifices circulaires 6 de l'embase 5 sont destinés à laisser pénétrer des fibres de résine de manière à créer des fibres de renfort 7 à travers les orifices circulaires 6. Mais la pénétration de la résine dans les orifices circulaires 6 est aléatoire, et dans ce cas les fibres de renfort 7 ne se répartissent pas suffisamment autour de l'embase 5. Le rivet 1 est alors mal ancré dans la pièce moulée 3. En outre, lors de l'injection de la résine, le flux d'écoulement 2 est perturbé par le corps 4 du rivet 1. Cette perturbation engendre un vortex 8 dans une zone située à l'arrière du corps 4, c'est-à-dire à l'opposé du point d'impact entre le flux d'écoulement 2 et le corps 4. Le vortex 8 perturbe le flux d'écoulement 2 dans la zone et crée des inclusions 9 de vide ou d'air dans la résine, représentées sur la figure 2 par des ellipses hachurées, ce qui affaiblit la structure de l'ensemble comprenant la pièce moulée 3 et le rivet 1. En particulier, de telles inclusions 9 ne sont pas toujours détectables et constituent une menace pour l'intégrité de l'ensemble qui, dans le temps, peut se fissurer gravement autour du rivet 1, voire se rompre.

Enfin, certaines pièces moulées peuvent avoir des formes complexes comportant une ou plusieurs courbures, notamment des courbures situées à proximité de l'insert, et les inserts doivent pouvoir être placés au niveau de ces courbures tout en offrant une bonne tenue mécanique à l'ensemble.

### Objet de l'invention

L'objet de l'invention consiste à fournir un insert destiné à être inclus dans une pièce moulée par injection qui permette de pallier les inconvénients précités, et en particulier qui offre une meilleure tenue mécanique de l'insert dans la pièce.

Un autre objet consiste à fournir un insert adapté aux formes complexes des pièces moulées par injection et qui garantit une tenue mécanique efficace.

Un autre objet de l'invention consiste à fournir une pièce moulée munie d'un insert qui soit robuste.

Selon un aspect de l'invention, il est proposé un insert destiné à être inclus dans une pièce moulée par injection, comprenant un corps s'étendant le long d'un axe longitudinal de l'insert, et une embase située à une extrémité du corps et munie d'au moins une plaque comportant au moins un orifice traversant et s'étendant selon un axe secondaire perpendiculaire à l'axe longitudinal.

Au moins un orifice traversant de l'embase est orienté selon une direction inclinée par rapport à l'axe longitudinal de l'insert et inclinée par rapport à l'axe secondaire.

Ainsi on améliore la pénétration des fibres de renfort lors de l'injection de la résine. La pénétration des fibres de renfort est particulièrement améliorée lorsque la direction d'orientation du ou des orifices traversant est inclinée vers la direction du flux d'écoulement laminaire de la résine. Ainsi, on fournit un insert qui améliore la répartition des fibres de renfort.

L'embase peut comporter plusieurs orifices traversant orientés selon une même direction inclinée par rapport à l'axe longitudinal de l'insert et inclinée par rapport à l'axe secondaire.

Au moins une plaque de l'embase peut avoir une forme ondulée ou crantée.

Une telle plaque permet de plier l'embase afin de pouvoir intégrer l'insert dans des pièces ayant des formes complexes. Par exemple la pièce peut présenter une courbure à proximité de l'insert. En d'autres termes, il arrive que la place allouée pour l'embase soit réduite et que l'on soit obligé de plier l'embase pour épouser les courbures de la pièce.

L'embase peut comporter plusieurs plaques superposées les unes aux autres.

Deux plaques superposées peuvent comporter des premières parties écartées respectivement les unes des autres et des deuxième parties jointes respectivement les unes aux autres.

Grâce aux premières parties écartées les unes des autres, on peut créer entre les plaques superposées, des zones de redressement du flux de résine et diminuer la dissipation par frottement de l'énergie mécanique de la résine lors de l'écoulement.

Des orifices traversant d'une plaque peuvent coïncider avec respectivement les orifices traversant d'une autre plaque superposée.

Des orifices traversant d'une plaque peuvent être décalés par rapport à respectivement des orifices traversant d'une autre plaque superposée.

Chaque orifice traversant peut avoir une section ayant une forme d'un quadrilatère.

Chaque orifice traversant peut avoir une section ayant une forme d'un losange, et les plus grandes diagonales des sections des orifices traversant sont parallèles entre elles.

Selon un mode de réalisation, le corps de l'insert a une section ayant une forme elliptique ou ovale.

Ainsi on limite les effets de dégradation d'un vortex lors de la phase d'injection de la résine. Un tel insert peut être un rivet ou un écrou.

Selon un autre mode de réalisation, le corps de l'insert comporte un premier tronçon ayant une section dont le contour externe est circulaire et un deuxième tronçon situé entre le premier tronçon et l'embase, le deuxième tronçon ayant une section dont le contour externe est elliptique ou ovale. Un tel insert peut être un rivet, un écrou, et de préférence une vis ou un goujon.

Chaque plaque peut être fixée au corps de l'insert par sertissage.

Selon un autre aspect de l'invention, il est proposé une pièce moulée par injection, comprenant un insert tel que défini ci-avant.

### Description sommaire des dessins

D'autres avantages et caractéristiques de l'invention apparaîtront à l'examen de la description détaillée de modes de réalisation, nullement limitatifs, et des dessins annexés sur lesquels :
- les figures 1 et 2, illustrent schématiquement deux vues de dessus d'un rivet selon l'art antérieur ;
- la figure 3, illustre schématiquement une vue en coupe du rivet des figures 1 et 2 ;
- la figure 4, illustre de façon schématique une vue de dessus d'un mode de réalisation d'un insert selon l'invention ;
- la figure 5, illustre schématiquement une vue en coupe selon l'axe A-A de l'insert de la figure 4 inclus dans une pièce moulée ;
- la figure 6, illustre schématiquement une vue latérale en perspective de l'insert de la figure 4 ;
- la figure 7, illustre de façon schématique une vue en perspective d'un autre mode de réalisation d'un insert selon l'invention ;
- la figure 8, illustre schématiquement un détail d'une vue en coupe selon l'axe B-B de l'insert de la figure 7 ; et
- la figure 9, illustre schématiquement une vue en coupe d'un autre mode de réalisation d'un insert selon l'invention.

### Description détaillée

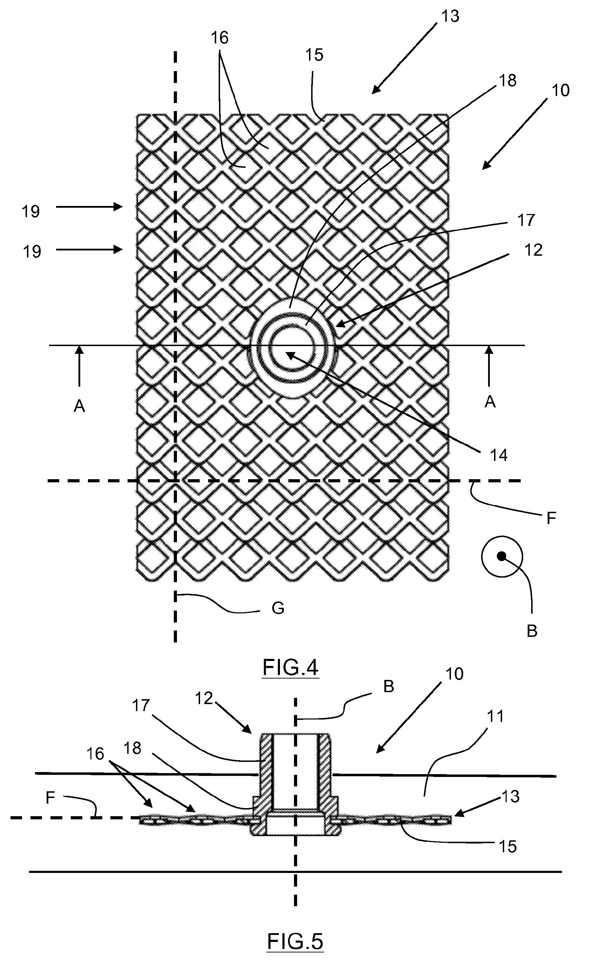

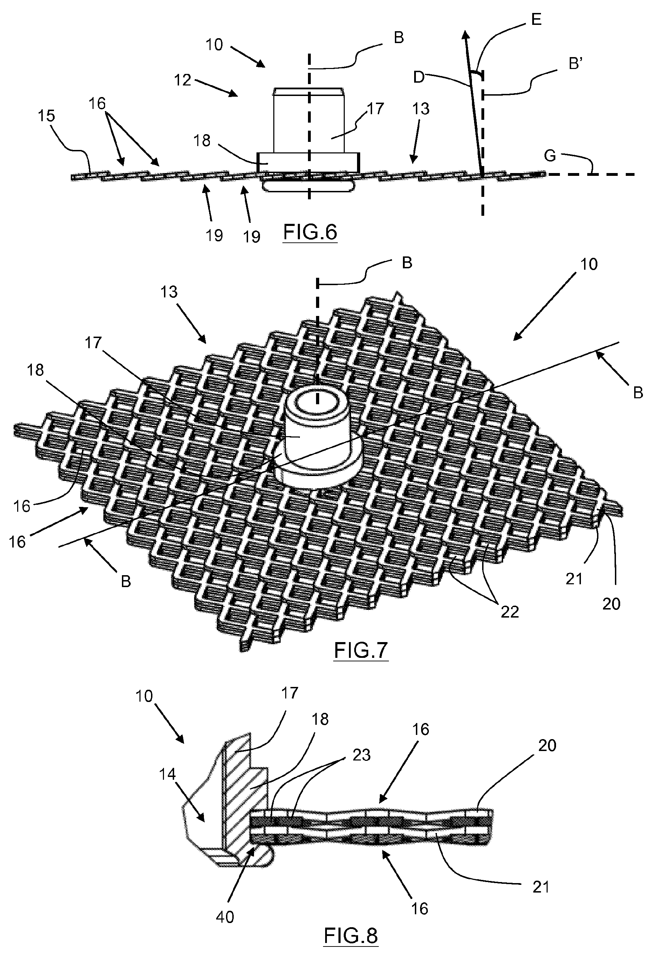

Sur les figures 4 à 6, on a représenté un insert 10 destiné à être inclus dans une pièce 11 moulée par injection, illustrée quant à elle sur la figure 5. La figure 6 est une vue latérale du côté droit de l'insert 10 de la figure 4. L'insert 10 peut être un écrou, un rivet, une vis ou un goujon. Un écrou est une pièce creuse taraudée, c'est-à-dire qui comporte un filetage interne, destinée à être fixée à une autre pièce filetée. Un rivet est un élément d'assemblage de pièces plates renflé à une extrémité et dont on écrase l'autre extrémité. Une vis ou goujon est une pièce pleine filetée, c'est-à-dire qui comporte un filetage externe. Préférentiellement, l'insert 10 est en métal, par exemple en acier. L'insert 10 comprend un corps 12, tel un fût, s'étendant le long d'un axe longitudinal B de l'insert 10, et une embase 13 située à une première extrémité du corps 12. Le corps 12 de l'insert 10 a une forme globalement cylindrique. On entend ici par cylindre, un solide limité par une surface cylindrique engendrée par une droite, notée génératrice, parcourant une courbe plane fermée, notée directrice, et deux plans parallèles coupant les génératrices. De préférence le corps 12 a une forme d'un cylindre creux muni d'un orifice 14 traversant ou borgne. Le corps 12 peut encore avoir une surface extérieure qui présente plusieurs faces axiales de manière à présenter des surfaces planes comme moyen anti-rotation de l'insert 10 dans la pièce moulée 11. La première extrémité est préférentiellement fermée pour, notamment former un insert creux borgne, ou un insert plein, ou encore empêcher la résine de pénétrer à l'intérieur du corps 12.

L'embase 13 comporte au moins une plaque 15 munie d'au moins un orifice traversant 16. Une telle plaque 15 permet d'augmenter la tenue mécanique de l'insert 10 dans la pièce moulée 11 lorsque de fortes résistances sont souhaitées. La plaque 15 peut avoir une forme circulaire, rectangulaire ou carrée. Elle peut comprendre plusieurs orifices traversant 16, et par exemple des orifices traversant 16 régulièrement répartis sur l'embase 13. De préférence, les orifices traversant 16 sont orientés selon une même direction D inclinée par rapport à l'axe longitudinal B de l'insert 10. On entend par incliné, le fait que chaque direction D forme un angle E non nul avec une parallèle B' à l'axe longitudinal B. En particulier l'angle E est supérieur à 0° et inférieur à 90°. Préférentiellement, l'angle E est supérieur à 0° et inférieur ou égal à 45° de manière à orienter orifices traversant 16 en direction du flux laminaire de résine 2. En effet, les orifices traversant 16 ont, chacun, un axe longitudinal D orienté selon une direction qui traverse l'orifice, l'axe longitudinal D de l'orifice correspond à la direction d'orientation de l'orifice. Lorsqu'on incline les axes longitudinaux D des orifices en direction du flux laminaire de résine 2, on favorise la pénétration de la résine dans les orifices traversant 16 et on améliore ainsi la répartition des fibres de renfort autour de l'embase 13. Préférentiellement, les orifices traversant 16 ont, chacun, une direction D inclinée par rapport à l'axe longitudinal B de l'insert 10. Par exemple les angles E des directions D avec l'axe longitudinal B peuvent être différents les uns des autres.

En outre, la plaque 15 s'étend le long d'un axe secondaire G. L'axe secondaire G est perpendiculaire à l'axe longitudinal B. Au moins un orifice traversant 16 est orienté selon une direction D inclinée par rapport à l'axe secondaire G. De préférence, les orifices traversant 16 ont, chacun, une direction D inclinée par rapport à l'axe secondaire G.

On obtient une inclinaison des directions D des orifices traversant 16, par exemple en utilisant une plaque 15 crantée ou ondulée. Ainsi, l'inclinaison des directions D des orifices traversant 16 produit une déflection du flux d'écoulement de résine 2, c'est-à-dire qu'elle modifie la direction de l'écoulement de la résine en facilitant le passage de la résine dans les orifices traversant 16 de manière à créer des fibres de renfort. Les orifices traversant 16 ont de manière générale une section ayant une forme d'un polygone, par exemple un hexagone, de préférence une section ayant une forme d'un quadrilatère pour alléger la plaque qui comporte moins de matière en comparaison avec un orifice circulaire ayant un diamètre égal à la largeur du quadrilatère. Par exemple, les orifices traversant 16 ont une section ayant une forme d'un losange, et les plus grandes diagonales des sections des orifices traversant 16 sont parallèles entre elles. Ainsi, on obtient une disposition homogène des orifices traversant 16, ce qui améliore la répartition des fibres de renfort. Sur la figure 5, on peut noter que la plaque 15 est ondulée selon un axe principal F de la plaque 15 qui est perpendiculaire à l'axe longitudinal B de l'insert 10. Sur la figure 6, on peut noter que la plaque 15 est crantée selon l'axe secondaire G de la plaque 15 qui est perpendiculaire à l'axe longitudinal B de l'insert 10 et à l'axe principal F. On entend par cranté, le fait que la plaque 15 comporte plusieurs lignes 19 d'orifices traversant 16, dans lesquelles les orifices traversant 16 sont alignés selon l'axe principal F, et les lignes 19 d'orifices traversant 16 se chevauchent pour incliner les orifices traversant 16 par rapport à l'axe longitudinal B. L'insert 10 décrit aux figures 4 à 6 a une forme ondulée et crantée selon respectivement les deux axes principal F et secondaire G. En variante, la plaque 15 est soit crantée, soit ondulée, uniquement selon l'axe secondaire G qui est destiné à être orienté dans le sens du flux laminaire 2.

En outre, selon un premier mode de réalisation, le corps 12 de l'insert 10 a une section ayant une forme elliptique ou ovale, de manière à obtenir un meilleur coefficient d'écoulement de la résine lors de l'opération de moulage de la pièce 11. La forme elliptique permet de faciliter le glissement du flux d'écoulement laminaire de la résine 2, et plus particulièrement elle permet aux flux d'écoulement 2 qui circule sur les côtés du corps 12 de l'insert 10 de se rejoindre dans la zone à l'arrière du corps 12 sans emprisonner des bulles d'air. En particulier, la surface extérieur du corps 2 a une forme elliptique, ainsi l'intérieur du corps 12 peut être circulaire de manière à fournir un écrou ou un rivet. Selon un deuxième mode de réalisation, le corps 12 comporte un premier tronçon 17 ayant une section dont le contour externe est circulaire et un deuxième tronçon 18 situé entre le premier tronçon 17 et l'embase 13. Le deuxième tronçon 18 a une section dont le contour externe est elliptique ou ovale pour diminuer les phénomènes de cavitation. Dans le deuxième mode de réalisation, le premier tronçon 17 a une surface externe circulaire pour fournir une vis ou un goujon. Préférentiellement, le grand axe de la forme elliptique du corps 12 est orienté dans la direction du flux laminaire 2.

Sur les figures 7 et 8, on a représenté un insert 10 dont l'embase 13 comporte deux plaques 20, 21 superposées. En variante, l'embase 13 peut comporter plusieurs plaques superposées. Chaque plaque comporte des orifices traversant 16 dont la direction d'orientation D est inclinée par rapport à l'axe longitudinal B de l'insert 10. Par exemple, chaque plaque comporte des orifices traversant 16 dont la direction d'orientation est inclinée par rapport à l'axe secondaire G de la plaque. En particulier, les plaques 20, 21 sont superposées de sorte que des orifices traversant 16 d'une plaque 20 coïncident avec respectivement des orifices traversant 16 d'une autre plaque 21 superposée. En variante, des orifices traversant 16 d'une plaque 20 peuvent être décalés par rapport à des orifices traversant 16 d'une autre plaque 21 superposée. Les orifices traversant 16 qui coïncident entre eux forment un canal 22 traversant l'embase 13. De manière que les orifices traversant 16 coïncident entre eux, les plaques 20, 21 ont la même forme. Un tel canal 22 a un axe longitudinal ayant une direction qui traverse le canal 22 et qui est inclinée par rapport à l'axe longitudinal B de l'insert. La liaison des plaques superposées 20, 21 entre elles peut être assurée par la fixation des plaques 20, 21 à l'insert 10. Dans ce cas, l'insert 10 comporte un corps ayant un tronçon de fixation, par exemple le deuxième tronçon 18, muni d'une encoche 40 située sur le pourtour extérieur du tronçon de fixation 18 et qui permet de pincer les plaques 20, 21 pour les maintenir dans leur position superposée. Par exemple, les plaques superposées 20, 21 sont fixées au deuxième tronçon 18 du corps 12 par sertissage. En d'autres termes, les plaques superposées 20, 21 sont introduites dans l'encoche 40 du deuxième tronçon 18 et le deuxième tronçon 18 est déformé pour sertir les plaques superposées 20, 21 au corps 12 de l'insert 10. En variante, l'insert 10 peut comporter une rondelle située entre l'une des plaques superposées 20, 21 et une extrémité de l'encoche 40 du deuxième tronçon 18 afin d'augmenter le pincement de la plaque. La liaison peut également être assurée par des agrafes en bordure des plaques superposées 20, 21, ou encore par des points de soudure 23. L'utilisation d'au moins deux plaques superposées 20, 21 permet une augmentation des fibres de renfort qui s'enchevêtrent entre les plaques 20, 21, ce qui augmente la résistance de l'insert 10 à la traction, au cisaillement ou à la flexion.

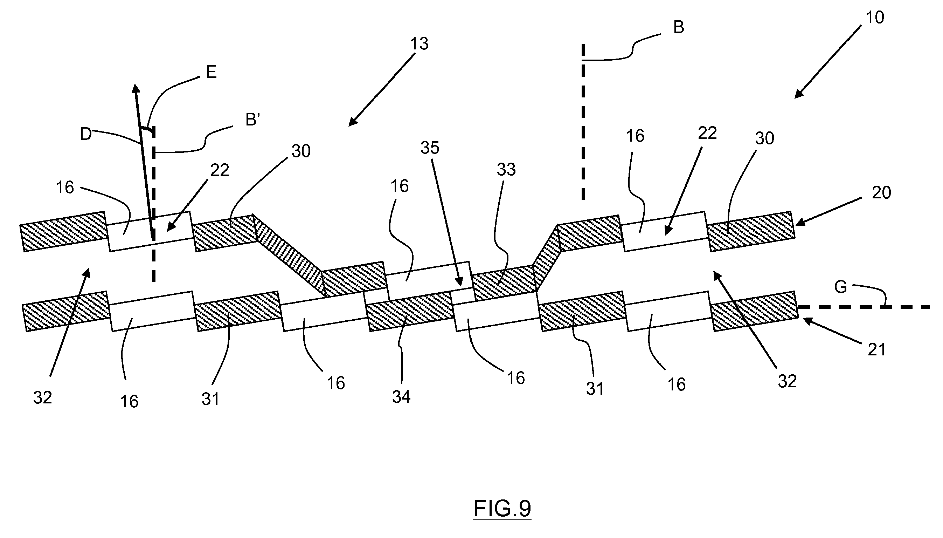

Sur la figure 9, on a représenté un autre mode de réalisation d'un insert 10 dont l'embase 13 comporte deux plaques 20, 21 superposées. Selon cet autre mode de réalisation, les plaques superposées 20, 21 comportent des premières parties 30, 31 écartées respectivement les unes des autres. Deux premières parties 30, 31 sont en vis-à-vis l'une de l'autre et forment un espace 32 pour une pénétration de la résine entre les plaques superposées 20, 21. Par ailleurs, les plaques superposées 20, 21 peuvent comporter des deuxièmes parties 33, 34 jointes respectivement les unes aux autres. Dans ces premières 30, 31 et deuxièmes 33, 34 parties, les orifices traversant 16 d'une plaque 21 peuvent, soit coïncider avec respectivement des orifices traversant 16 d'une autre plaque superposée 21 et former des premiers canaux traversant 22, soit être décalés par rapport à respectivement des orifices traversant 16 d'une autre plaque superposée 21 pour former des deuxièmes canaux traversant 35. Par exemple, comme illustré sur la figure 9, les orifices traversant 16 situés dans les premières parties 30, 31 des plaques superposées 20, 21 coïncident entre eux et forment des premiers canaux traversant 22. D'autres orifices traversant 16 situés dans les deuxièmes parties 33, 34 des plaques superposées 20, 21 sont décalés entre eux et forment des deuxièmes canaux traversant 35 plus étroits que les premiers canaux traversant 22.

Un tel insert permet un assemblage d'un élément sur une pièce réalisée dans un matériau composite thermodurcissable ou thermoplastique, et plus particulièrement pour un matériau renforcé de fibres, en verre, carbone, aramide, céramique,... L'insert est particulièrement adapté pour l'industrie automobile et peut également être utilisé dans le secteur naval ou celui de l'aéronautique.

## Revendications

1. Insert destiné à être inclus dans une pièce moulée par injection, comprenant un corps (12) s'étendant le long d'un axe longitudinal (B) de l'insert, et une embase (13) située à une extrémité du corps (12) et munie d'au moins une plaque (15) comportant au moins un orifice traversant (16) et s'étendant selon un axe secondaire (G) perpendiculaire à l'axe longitudinal (B), **caractérisé en ce qu'**au moins un orifice traversant (16) de l'embase (13) est orienté selon une direction (D) inclinée par rapport à l'axe longitudinal (B) de l'insert et inclinée par rapport à l'axe secondaire (G).

2. Insert selon la revendication 1, dans lequel l'embase (13) comporte plusieurs orifices traversant (16) orientés selon une même direction (D) inclinée par rapport à l'axe longitudinal (B) de l'insert et inclinée par rapport à l'axe secondaire (G).

3. Insert selon la revendication 1 ou 2, dans lequel au moins une plaque (15) de l'embase (13) a une forme ondulée ou crantée.

4. Insert selon l'une des revendications 1 à 3, dans lequel l'embase (13) comporte plusieurs plaques superposées (20, 21) les unes aux autres.

5. Insert selon la revendication 4, dans lequel deux plaques superposées (20, 21) comportent des premières parties (30, 31) écartées respectivement les unes des autres et des deuxième parties (32, 33) jointes respectivement les unes aux autres.

6. Insert selon l'une des revendications 4 ou 5, dans lequel des orifices traversant (16) d'une plaque (20) coïncident avec respectivement des orifices traversant (16) d'une autre plaque superposée (21).

7. Insert selon l'une des revendications 4 à 6, dans lequel des orifices traversant (16) d'une plaque (20) sont décalés par rapport à respectivement des orifices traversant (16) d'une autre plaque superposée (21).

8. Insert selon l'une des revendications 1 à 7, dans lequel chaque orifice traversant (16) a une section ayant une forme d'un quadrilatère.

9. Insert selon l'une des revendications 1 à 8, dans lequel chaque orifice traversant (16) a une section ayant une forme d'un losange, et les plus grandes diagonales des sections des orifices traversant (16) sont parallèles entre elles.

10. Insert selon l'une des revendications 1 à 9, dans lequel le corps (12) de l'insert a une section ayant une forme elliptique ou ovale.

11. Insert selon l'une des revendications 1 à 9, dans lequel le corps (12) de l'insert comporte un premier tronçon (17) ayant une section dont le contour externe est circulaire et un deuxième tronçon (18) situé entre le premier tronçon (17) et l'embase (13), le deuxième tronçon (18) ayant une section dont le contour externe est elliptique ou ovale.

12. Insert selon l'une des revendications 1 à 11, dans lequel chaque plaque (20, 21) est fixée au corps (12) de l'insert par sertissage.

13. Pièce moulée par injection, comprenant un insert selon l'une des revendications 1 à 12.

## Patentansprüche

1. Einsatz, der dazu bestimmt ist, in ein Spritzgussteil integriert zu werden, umfassend einen Körper (12), der sich entlang einer Längsachse (B) des Einsatzes erstreckt, und einen Sockel (13), der sich an einem Ende des Körpers (12) befindet und mit mindestens einer Platte (15) versehen ist, die mindestens eine durchgehende Öffnung (16) hat und sich entlang einer Sekundärachse (G) erstreckt, die lotrecht zur Längsachse (B) verläuft, **dadurch gekennzeichnet, dass** mindestens eine durchgehende Öffnung (16) des Sockels (13) in einer Richtung (D) ausgerichtet ist, die bezüglich der Längsachse (B) des Einsatzes geneigt und bezüglich der Sekundärchse (G) geneigt ist.

2. Einsatz nach Anspruch 1, bei dem der Sockel (13) mehrere durchgehende Öffnungen (16) hat, die in ein und derselben Richtung (D) ausgerichtet sind, die bezüglich der Längsachse (B) des Einsatzes geneigt und bezüglich der Sekundärachse (G) geneigt ist.

3. Einsatz nach Anspruch 1 oder 2, bei dem mindestens eine Platte (15) des Sockels (13) eine gewellte oder gerippte Form hat.

4. Einsatz nach einem der Ansprüche 1 bis 3, bei dem der Sockel (13) mehrere übereinander angeordnete Platten (20, 21) umfasst.

5. Einsatz nach Anspruch 4, bei dem zwei übereinander angeordnete Platten (20, 21) erste Abschnitte (30, 31) aufweisen, die voneinander entfernt sind, und zweite Abschnitte (32, 33), die jeweils miteinander verbunden sind.

6. Einsatz nach einem der Ansprüche 4 oder 5, bei dem durchgehende Öffnungen (16) einer Platte (20) jeweils mit durchgehenden Öffnungen (16) einer anderen darüber angeordneten Platte (21) zusammenfallen.

7. Einsatz nach einem der Ansprüche 4 bis 6, bei dem durchgehende Öffnungen (16) einer Platte (20) jeweils versetzt bezüglich durchgehender Öffnungen (16) einer anderen darüber angeordneten Platte (21) angeordnet sind.

8. Einsatz nach einem der Ansprüche 1 bis 7, bei dem jede durchgehende Öffnung (16) einen viereckförmigen Querschnitt hat.

9. Einsatz nach einem der Ansprüche 1 bis 8, bei dem jede durchgehende Öffnung (16) einen rautenförmigen Querschnitt hat und die größten Diagonalen der Querschnitte der durchgehenden Öffnungen (16) parallel zueinander sind.

10. Einsatz nach einem der Ansprüche 1 bis 9, bei dem der Körper (12) des Einsatzes einen ellipsenförmigen oder ovalen Querschnitt hat.

11. Einsatz nach einem der Ansprüche 1 bis 9, bei dem der Körper (12) des Einsatzes einen ersten Abschnitt (17) mit einem Querschnitt hat, dessen äußerer Umriss kreisförmig ist, sowie einen zweiten Abschnitt (18), der sich zwischen dem ersten Abschnitt (17) und dem Sockel (13) befindet, wobei der zweite Abschnitt (18) einen Querschnitt hat, dessen äußerer Umriss ellipsenförmig oder oval ist.

12. Einsatz nach einem der Ansprüche 1 bis 11, bei dem jede Platte (20, 21) durch Bördeln am Körper (12) des Einsatzes befestigt ist.

13. Spritzgussteil, das einen Einsatz nach einem der Ansprüche 1 bis 12 umfasst.

## Claims

1. Insert designed to be included in a part moulded by injection, comprising a body (12) extending along a longitudinal axis (B) of the insert, and a base (13) situated at one end of the body (12) and provided with at least one plate (15) comprising at least one pass-through opening (16) and extending along a secondary axis (G) perpendicular to the longitudinal axis (B), **characterized in that** at least one pass-through opening (16) of the base (13) is oriented in a direction (D) that is inclined with respect to the longitudinal axis (B) of the insert and inclined with respect to the secondary axis (G).

2. Insert according to claim 1, wherein the base (13) comprises several pass-through openings (16) oriented in a same direction (D) inclined with respect to the longitudinal axis (B) of the insert and inclined with respect to the secondary axis (G).

3. Insert according to claim 1 or 2, wherein at least one plate (15) of the base (13) has an undulated or notched shape.

4. Insert according to one of claims 1 to 3, wherein the base (13) comprises several plates superposed (20, 21) on one another.

5. Insert according to claim 4, wherein two superposed plates (20, 21) comprise first parts (30, 31) respectively separated from one another and second parts (32, 33) respectively joined to one another.

6. Insert according to claim 4 or 5, wherein pass-through openings (16) of a plate (20) coincide respectively with pass-through openings (16) of another superposed plate (21).

7. Insert according to one of claims 4 to 6, wherein pass-through openings (16) of a plate (20) are staggered with respect to pass-through openings (16) of another superposed plate (21).

8. Insert according to one of claims 1 to 7, wherein each pass-through opening (16) has a cross-section having the shape of a quadrilateral.

9. Insert according to one of claims 1 to 8, wherein each pass-through opening (16) has a cross-section having the shape of a rhombus, and the larger diagonals of the cross-sections of the pass-through openings (16) are parallel to one another.

10. Insert according to one of claims 1 to 9, wherein the body (12) of the insert has a cross-section having an elliptical or oval shape.

11. Insert according to one of claims 1 to 9, wherein the body (12) of the insert comprises a first section (17) having a cross-section with a circular external profile and a second section (18) situated between the first section (17) and the base (13), the second section (18) having a cross-section with an external profile which is elliptical or oval.

12. Insert according to one of claims 1 to 11, wherein each plate (20, 21) is fixed to the body (12) of the insert by crimping.

13. Part moulded by injection, comprising an insert according to one of claims 1 to 12.
